Europäisches Patentamt

**European Patent Office**

Office européen des brevets

(11) Veröffentlichungsnummer: **0 004 581**
**B1**

(12) **EUROPÄISCHE PATENTSCHRIFT**

(45) Veröffentlichungstag der Patentschrift:
**23.02.83**

(51) Int. Cl.³: **F 41 C 11/06**, F 16 H 27/06,
F 41 C 13/00

(21) Anmeldenummer: **79100772.7**

(22) Anmeldetag: **15.03.79**

(54) **Automatische Handfeuerwaffe.**

(30) Priorität: **30.03.78  DE 2813633**

(43) Veröffentlichungstag der Anmeldung:
**17.10.79 Patentblatt 79/21**

(45) Bekanntmachung des Hinweises auf die Patenterteilung:
**23.02.83 Patentblatt 83/8**

(84) Benannte Vertragsstaaten:
**BE CH FR GB IT NL SE**

(56) Entgegenhaltungen:
**DE-A-1 935 042**
**DE-A-2 122 883**
**DE-A-2 522 359**
**DE-B-1 117 450**
**FR-A-729 692**
**FR-A-2 257 887**
**US-A-1 357 513**
**US-A-2 512 894**
**US-A-3 075 433**
**US-A-3 320 855**

(73) Patentinhaber: **Heckler & Koch GmbH, Pfäfflinstrasse
Postfach 1329, D-7238 Oberndorf (DE)**

(72) Erfinder: **Ketterer, Dieter, Mörikeweg 51,
D-7238 Oberndorf (DE)**
Erfinder: **Jakubaschk, Horst, Im Oschle 28,
D-7238 Oberndorf 7 (DE)**
Erfinder: **Rommel, Emil, Keplerstrasse 669,
D-7242 Dornhan (DE)**

(74) Vertreter: **Späth, Siegfried, Dipl.-Ing. et al,
Hohentwielstrasse 41, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Automatische Handfeuerwaffe

Die Erfindung betrifft eine automatische Handfeuerwaffe, insbesondere Gewehr mit einer in einem rohrfesten Teil vorgesehenen, zur Rohrachse senkrechten zylindrischen Aussparung, deren Wand als Lagerung eines darin koaxial angeordneten, walzenförmigen Verschlussteiles dient, dass durch eine Anordnung zum Verschwenken in eine Lade-, eine Schuss- und eine Auswerferposition um seine Längsachse schwenkbar ist und ein in seiner Schussposition mit dem Rohr fluchtendes Patronenlager enthält, das in dieser Position durch das rohrfeste Teil nach hinten abgeschlossen ist, wogegen in der Ladeposition das Patronenlager zum Einführen einer eine Treibladung und ein Geschoss umfassenden Patrone, insbesondere einer hülsenlosen Patrone, der Austrittsöffnung eines die Patronen enthaltenden Magazins gegenübersteht und das Verschlussteil durch die Anordnung zum Verschwenken in seiner jeweiligen Position gehalten ist, wobei das Magazin an einer Seite der Waffe und insbesondere oberhalb des Rohres angeordnet ist.

Bei dieser aus der DE-C 2413615 bekannten Waffe ist durch die Ausgestaltung des schwenkbaren Verschlussteiles und die Art seiner Lagerung ein einfacher und kostengünstiger Aufbau erzielt, und es treten keine durch den Gasdruck erzeugte, das Verschlussteil verschwenkende Momente auf. Dabei ist das Verschlussteil als Walze ausgebildet, die mit einer Querbohrung versehen ist, die das Patronenlager bildet. Schussposition und Ladeposition unterscheiden sich durch eine Verschlussteildrehung von etwa 90°. Zum Ausstossen einer im Patronenlager befindlichen Patrone, wenn diese beispielsweise nicht gezündet hat oder wenn die Waffe entladen werden soll, wird das Verschlussteil in eine Zwischenstellung zwischen Ladeposition und Schussposition geschwenkt, und es wird ein auf die Geschossspitze wirkender Ausstosser eingeführt, der die Patrone manuell betätigt unter etwa 45° zur Rohrachse nach oben auswirft. Zur Erzeugung der Schwenkbewegung der Walze dient ein Schieber, der in Längsrichtung der Waffe verschiebbar gelagert ist. Der Schieber weist einen Steuerschlitz auf, in den ein an der Stirnfläche des Verschlussteiles angebrachter exzentrischer Zapfen formschlüssig eingreift. Der Schieber dient ferner auch der Betätigung eines Schusszählers ebenso wie der Betätigung eines Ladehebels, der in der Ladeposition des Verschlussteiles die nächste Patrone aus dem Magazin zuführt. Die gesamte Anordnung einschliesslich des Ausstossers erfordert zu ihrer Verwirklichung eine Vielzahl von Einzelteilen, was sich auf Herstellungskosten und Gewicht der Waffe auswirkt. Die Aufgabe der vorliegenden Erfindung liegt darin, die bekannte automatische Handfeuerwaffe so zu verbessern, dass ein kostengünstiger und gewichtssparender Aufbau der Waffe bei zuverlässiger Funktionsweise erreicht wird.

Gelöst wird diese Aufgabe bei einer automatischen Handfeuerwaffe der eingangs genannten Art dadurch, dass das Verschlussteil durch die Anordnung zum Verschwenken nur in einer gleichbleibenden Richtung drehbar ist, dass eine Ausstossöffnung für Hülsen oder nicht abgeschossene Patronen diametral gegenüber der Austrittsöffnung des Magazins angeordnet ist, und dass auf derselben Seite der Waffe wie das Magazin ein Ausstosser angeordnet ist.

Durch diese Massnahmen lässt sich, wie sich allerdings erst bei genauerer Betrachtung herausstellt, der Aufbau der Waffe vereinfachen und die Zahl der erforderlichen Einzelteile und damit auch das Gewicht der Waffe vermindern. Ausserdem wird bei einer intermittierenden Rotationsbewegung des Verschlussteiles mit gleichbleibender Drehrichtung ein gleichmässigerer Bewegungsablauf erzielt. Schliesslich ist von Vorteil, dass sich beim Ausstossen einer Patrone das walzenförmige Verschlussteil nicht in einer Zwischenposition zwischen Lade- und Schussposition befindet, sondern es ist gegenüber der Ladeposition um 180° verschwenkt. Ist, wie es auch bei der eingangs genannten bekannten Waffe vorgesehen ist, das Magazin an der Oberseite des Laufes entlang angeordnet, so ergibt sich der Vorteil, dass das Ausstossen der Patrone nach unten erfolgen kann. Auch ist durch die Anordnung des Ausstossers an derselben Seite des Rohrs, wo sich auch das Magazin befindet, ein zweckmässigerer und vor allem raumsparender Aufbau möglich, weil die Bauhöhe der Waffe nicht dadurch in unerwünschter Weise vergrössert wird, dass sich das Magazin und der Ausstosser auf unterschiedlichen Seiten des Rohrs befinden. Der Ausstosser kann in einfacher Weise hinter dem rückwärtigen Ende des Magazins vorgesehen sein und hat dadurch keinen störenden zusätzlichen Raumbedarf, der zu einer Vergrösserung der Waffenabmessungen in der Höhe zwingen würde.

Durch die US-A 39232 ist eine von Hand zu ladende Handfeuerwaffe bekannt, bei der in einer zur Rohrachse senkrechten Aussparung ein walzenförmiges Verschlussteil koaxial angeordnet und zum Laden um seine Längsachse mit gleichbleibender Drehrichtung drehbar ist, und das ein in der Schussposition des Verschlussteiles mit dem Rohr fluchtendes Patronenlager in Gestalt einer Querbohrung aufweist. Über eine Antriebsvorrichtung wird das Verschlussteil jeweils beim Spannen des Hahns gedreht. Das Patronenlager ist symmetrisch angeordnet, so dass sich nach jeweils einer Drehung von 180° das Verschlussteil wieder in Schussposition befindet. Die Länge der Patrone (einschliesslich Geschoss) ist etwa gleich dem Durchmesser des Verschlussteiles. In einer Zwischenstellung zwischen den aufeinanderfolgenden Schusspositionen nimmt das Verschlussteil eine Ladeposition ein, in der manuell eine Patrone eingeführt werden kann, nachdem zuvor die vom letzten Schuss noch im Patronenlager befindliche Patrone in der gleichen Bewegungsrichtung, in der die neue Patrone zugeführt wird, ausgestossen wurde. In die Wandung der Bohrung, die das Verschlussteil umgibt, ist eine Aussparung eingearbeitet, durch die der Hahn auf das rückwärtige Ende der Patrone und die dort befindliche Zündmasse schlagen kann. Das zylindrische Verschlussteil wird nicht durch die Verschwenkvorrichtung in seiner jeweiligen Position gehalten, sondern es wird lediglich in der schussbereiten Position mittels einer Sperrvorrichtung gehalten, die einen federbelasteten Stift mit abgerundeter Spitze aufweist, der mit dem Verschlussteil in Eingriff kommt.

Bei der bekannten Waffe handelt es sich somit nicht um eine automatische Waffe, in der schussbereiten Position ist das Patronenlager nach hinten nicht abgedichtet, weil dort eine Öffnung vorhanden ist, durch die der Hammer auf den Patronenboden schlägt, und das Verschlussteil ist in der Ladeposition nicht in definierter Stellung gehalten, sondern nur in der schussbereiten Position. Die Sperrvorrichtung ist jedoch so ausgebildet, dass sie für eine automatische Waffe mit der bei automatischen Waffen üblichen hohen Schusskadenz nicht geeignet ist.

Die DE-A 21 22 883 zeigt eine schwenkbare Brennkammer, die das rückwärtige Rohrende einer Waffe in der Schusslage verschliesst. In dieser Brennkammer befindet sich nur das Treibmittel, wogegen das Geschoss getrennt vom Treibmittel vor dem Befüllen der Brennkammer in den Lauf eingeführt werden muss. Ein solches Prinzip ist für Handfeuerwaffen nicht brauchbar.

Die in der FR-A 729 692 beschriebene Waffe eignet sich nur für Platzpatronen oder Schreckschusspatronen, also für Patronen ohne Geschoss.

Bei einer Ausbildung des Verschlussteiles bei der Erfindung gemäss den obigen Ausführungen wird dieses aus der Ladeposition um 90° in die Schussposition verschwenkt. Anschliessend erfolgt ein Weiterschwenken mit gleicher Drehrichtung entweder bis in die Auswerferposition, wenn eine Patrone ausgestossen werden soll, oder um weitere 180° wieder in die Ladeposition. Dabei ist jedoch der Bewegungsablauf der Verschlusswalze relativ ungleichmässig, weil während der normalen Schussabgabe jeweils eine Schwenkbewegung um 90° mit einer Schwenkbewegung um 270° abwechselt. Um dieser Ungleichheit der Schwenkwinkel zu begegnen ist bei besonders bevorzugten Ausführungsformen der Erfindung das Patronenlager im Verschlussteil zu einer Quermittelebene symmetrisch ausgebildet und vermag zwei Schusspositionen einzunehmen, die sich durch eine Drehung des Verschlussteiles um 180° voneinander unterscheiden. Diese Ausführungsform hat den Vorteil, dass jede Drehbewegung des Verschlussteiles einen Schwenkwinkel von etwa 90° einnimmt. Aus der Ladeposition wird das Verschlussteil um 90° in die Schussposition verschwenkt. Nach Abgabe des Schusses verschwenkt es um weitere 90°, worauf sich das entgegengesetzte Ende des Patronenlagers in der Ladeposition befindet. Hat die Patrone versagt, so stösst die nachfolgende Patrone den Zündversager beim Einführen aus dem Patronenlager nach unten heraus und es ist die Waffe nach einem Weiterschwenken des Verschlussteiles um 90° wieder schussbereit. Durch diese Ausbildung der Waffe wird ein sehr gleichmässiger und damit schonender Bewegungsverlauf erzielt und es lässt sich eine hohe Schusskadenz erreichen. Dabei lässt sich die Waffe sowohl zum Verschiessen von Hülsenmunition ebenso wie zum Verschiessen von hülsenloser Munition verwenden. Beim Verschiessen von Hülsenmunition muss jedesmal die neu eingeführte Patrone die Hülse der abgeschossenen Patrone unmittelbar oder über ein im Verschlussteil vorgesehenes Zwischenglied ausstossen. Ihre besonderen Vorteile zeigt die erfindungsgemässe Waffe jedoch beim Verschiessen von hülsenloser Munition.

Der Schwenkwinkel des Verschlussteiles zwischen Ladeposition und Schussposition beträgt vorzugsweise, wie bereits erwähnt, 90°. Es ist jedoch auch möglich, wenn es konstruktive Gegebenheiten erfordern, diesen Winkel etwas zu vergrössern oder zu vermindern. Dagegen ist der Schwenkwinkel des Verschlussteiles bei symmetrischer Patronenlagerausbildung zwischen zwei Ladevorgängen stets 180°.

Bei bevorzugten weiteren Ausgestaltungen der Erfindung greift das die Patrone in das Patronenlager im Verschlussteil einschiebende Ende eines Ladehebels ausser der Patronenmitte an und lässt diese frei, und es ist in der Mittelebene der Ausstosser angeordnet, der bei fehlender Patrone unter Federkraft in eine Lage schwenkt, in der er dem Patronenlager gegenübersteht. Fehlt die Patrone, weil entweder das Magazin leer oder abgenommen ist, steht der Ausstosser dem Patronenlager gegenüber und kann eine im Patronenlager befindliche Patrone nach unten ausstossen. Handelt es sich nur um einen Zündversager, so wirkt die nächste zugeführte Patrone als Ausstosser und stösst die im Patronenlager noch befindliche Patrone nach unten heraus. Der Ausstosser ist über einen Bowdenzug von einer manuell zu betätigenden Durchladeanordnung in das Patronenlager einschiebbar.

Der Antrieb des Verschlussteiles kann unterschiedlich gestaltet und konstruktiv verschieden gelöst sein. Bei einer bevorzugten Ausführungsform der Erfindung ist an zumindest einer Stirnseite an dem Verschlussteil ein Malteserkreuzgetriebe als Anordnung zum Schwenken vorgesehen. Malteserkreuzgetriebe weisen vorteilhafte Bewegungs- und Beschleunigungsverläufe auf und sind in vielfältigen konstruktiven Gestaltungen in der Technik bekannt. Bevorzugt umfasst es vier in die Stirnseite des Verschlussteiles eingearbeitete radiale Nuten, in die Zapfen einer Kurvenscheibe eingreifen, die an deren Stirnseite vorstehend angebracht sind, wobei die Kurvenscheibe von der Anordnung zum Schwenken des Verschlussteiles während eines Schusszyklus einmal um 360° drehbar ist. Eine Drehung der Kurvenscheibe um 360° ergibt eine Drehung des Verschlussteiles um 180°.

Um das Verschlussteil in der Schussposition ebenso wie in der Ladeposition und/oder in der Schussposition zuverlässig und exakt zu fixieren, bis der Ladevorgang abgeschlossen bzw. der Schuss abgegeben ist, ist gemäss bevorzugten Ausführungsformen der Erfindung das Verschlussteil in der Ebene der Malteserkreuznute mit kreisabschnittförmigen Aussparungen im Randbereich versehen und es ist an der Kurvenscheibe ein in die Aussparung eingreifender Sperrnocken angebracht, dessen wirksame Kontur konzentrisch zur Kurvenscheibenrotationsachse ist. Dabei ist die Anordnung zwischen Zapfen und Sperrnocken so gewählt, dass stets entweder die Zapfen oder der Sperrnocken in die Malteserkreuznuten bzw. die Aussparung eingreifen. Es ist dadurch stets eine zuverlässige weil formschlüssige Zuordnung der Winkellage von Kurvenscheibe und Verschlussteil zueinander gewährleistet.

Die erfindungsgemässe Waffe ist bevorzugt, ebenso wie die Waffe nach dem Stammpatent, als Gasdrucklader ausgebildet, von deren Gaskolben die Bewegungsvorgänge erzeugt sind. Bei einer bevorzugten Ausführungsform der Erfindung betätigt der Gaskolben einen Steuerschieber entgegen Federkraft, der mit zwei Verzahnungen versehen ist, die abwechselnd bei Vor- bzw. Rücklauf des Steuerschiebers mit entsprechenden Vorsprüngen der Kurvenscheibe in Eingriff treten und diese um jeweils 180° verschwenken. Dabei bewirkt eine Verschwenkung der Kurvenscheibe um 180° eine Verschwenkung des Verschlussteiles um die gewünschten 90°. Während eines Teiles der Bewegung des Steuerschiebers wird über die Kurvenscheibe das Verschlussteil verschwenkt, solange nämlich die Zapfen der Kurvenscheibe in die Malteserkreuznuten eingreifen. Während des anderen Teiles der Bewegung des Steuerschiebers und der Kurvenscheibe wird das Verschlussteil fixiert, wenn nämlich der Sperrnocken sich in der Aussparung des Verschlussteiles dreht. Diese Ausbildung gewährleistet eine hohe Belastbarkeit, weil nur relativ geringe Flächenpressungen auftreten und damit eine hohe Verschleissbeständigkeit bei gleichzeitig präziser Fixierung des Verschlussteiles in Lade- und Schussposition.

Bei bevorzugten Ausführungsformen der Erfindung sind die Vorsprünge als axiale Bolzengruppe mit zumindest zwei, vorzugsweise drei Bolzen ausgebildet, die an der den Zapfen und dem Sperrnocken gegenüberliegenden Stirnseite an der Kurvenscheibe vorgesehen sind; an die einander gegenüberliegenden Verzahnungen des Steuerschiebers schliessen gerade Flanken oder Kanten an, die in Richtung der Steuerschieberbewegung verlaufen und an denen die Bolzen nach dem Aussereingriffkommen mit der Verzahnung eine Weiterdrehung der Kurvenscheibe formschlüssig verhindernd anliegen. Dies hat den Vorteil, dass die Bewegung des Steuerschiebers beliebig lang sein kann und die Funktion der Anordnung nicht von der Bewegungsamplitude des Steuerschiebers abhängt, solange diese nur eine gewisse Mindestgrösse aufweist, solange nämlich die Bolzen die Verzahnung voll durchlaufen. Dies erlaubt ein gefedertes Abfangen der Steuerschieberbewegung, ohne dass dadurch die Funktion der Anordnung in irgendeiner Weise beeinträchtigt wird. Die Bolzen fixieren durch ihre Anlage an den Flanken oder Kanten des geführten Steuerschiebers die Einhaltung der jeweiligen Position des Verschlussteiles.

Der Antrieb des Ladehebels kann unterschiedlich gestaltet sein. Im allgemeinen ist der Ladehebel mit einer Klinke versehen und führt eine Schwenkbewegung durch. Die Klinke ist erforderlich, weil sich das patronenseitige Ladehebelende während des Einschiebevorganges der Patrone über den Querschnitt der Patrone erstreckt, jedoch bei der Rückbewegung sich bereits die nächste Patrone an dieser Stelle befinden können soll. Eine derartige Klinke mit ihrer Lagerung und der notwendigen Feder bedeutet jedoch einen zusätzlichen Aufwand und eine zusätzliche Störungsquelle. Es wird daher angestrebt, das patronenseitige Ladehebelende eine Koppelkurve durchlaufen zu lassen die einen geraden Abschnitt für das Einschieben der Patrone in das Patronenlager und hieran anschliessende und hierzu etwas senkrechte und in einem Bogen miteinander verbundene Anschlussabschnitte aufweist. Um dies zu verwirklichen greift bei einer bevorzugten Ausführungsform der Erfindung die um eine rohrfeste Achse drehbare Kurvenscheibe in eine Aussparung eines Steuerhebels ein, der mit einem Ende an einem als Kniehebel ausgebildeten Ladehebel angelenkt ist. Dabei weist in weiterer Ausgestaltung die Kurvenscheibe zwei axial zueinander versetzte Aussenkonturen auf, deren eine in eine Aussparung und deren andere an einer aufgesetzten Leiste des als flache Platine ausgebildeten Steuerhebels angreift; mit einer derartigen Anordnung lässt sich die gewünschte Koppelkurve erzielen. Um der Koppelkurve einen noch günstigeren Verlauf zu verleihen ist das dem Ladehebel abgewandte Ende des Steuerhebels in einer rohrfesten und zur Rohrachse schrägen Nut verschiebbar gelagert, wodurch dem ladehebelseitigen Steuerhebelende die gewünschte Koppelkurvenbewegung aufgezwungen wird.

Die Anlage des Steuerhebels an den Kurvenscheiben kann durch Federn bewirkt sein. Derartige Federn haben jedoch einen zusätzlichen Raumbedarf und können brechen, was die Zuverlässigkeit der Waffe beeinträchtigt. Bei bevorzugten Ausführungsformen der Erfindung sind daher die Konturen der Kurvenscheibe als Gleichdick ausgebildet, die stets an zwei einander gegenüberliegenden zueinander parallelen Kanten des Steuerhebels anliegen und es sind die beiden Kantenpaare etwas senkrecht zueinander angeordnet. Derartige Gleichdick-Konturen sind bekannt; sie zeichnen sich dadurch aus, dass zueinander parallele Tangenten an die Kontur einen konstanten Abstand bei Drehung des Gleichdicks einhalten. Es ist also auf diese Weise eine formschlüssige und damit zuverlässige und sichere Bewegungserzeugung erreicht. Durch die beiden zueinander etwas senkrechten Kantenpaare, die einerseits durch die Aussparung im Steuerhebel und andererseits durch daran aufgesetzte Leisten gebildet sind, ist der Steuerhebel in seiner Ebene in allen Richtungen formschlüssig geführt und bewegbar, wodurch sich zusammen mit der Lagerung in der Schrägnut ein eindeutiger und stets reproduzierbarer Bewegungsverlauf zur Erzeugung der Koppelkurve des Ladehebels ergibt.

Bevorzugt ist die Anordnung zum Schwenken des Verschlussteiles aus Steuerschieber, Steuerhebel und Kurvenscheiben doppelt ausgeführt und symmetrisch an beiden Seiten des Verschlussteiles angeordnet.

In der Zeichnung ist die Erfindung anhand eines Ausführungsbeispieles dargestellt, das anschliessend erläutert und beschrieben wird. Es zeigen:

Fig. 1 in Seitenansicht die für die Erfindung wesentlichen Teile eines automatischen Gewehrs,

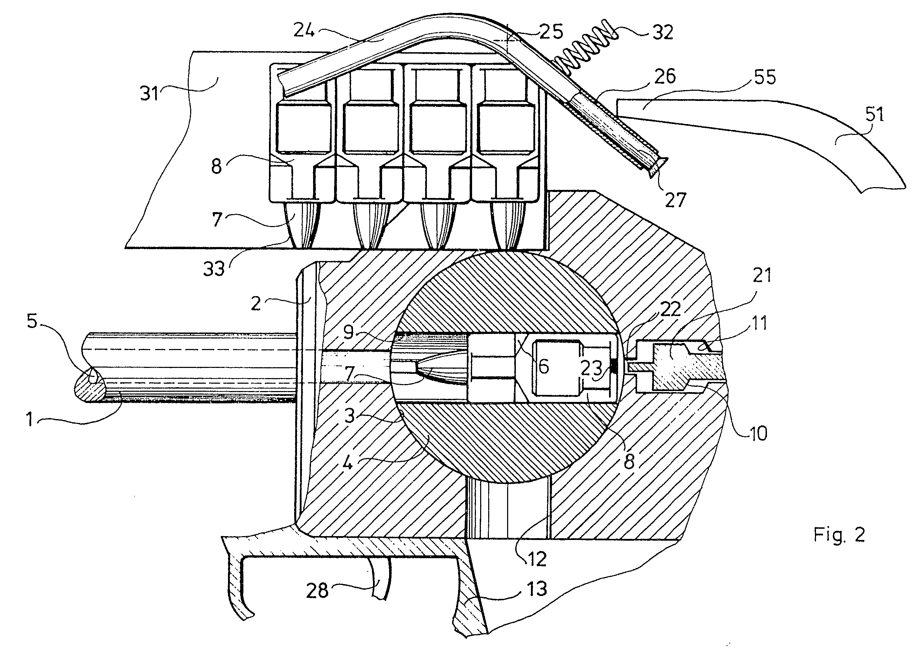

Fig. 2 teils in Ansicht teils in einem Mittellängsschnitt das Verschlussteil und die angrenzenden Bauteile des Gewehres nach Fig. 1 in einer zu der Darstellung von Fig. 1 parallelen Ebene, und

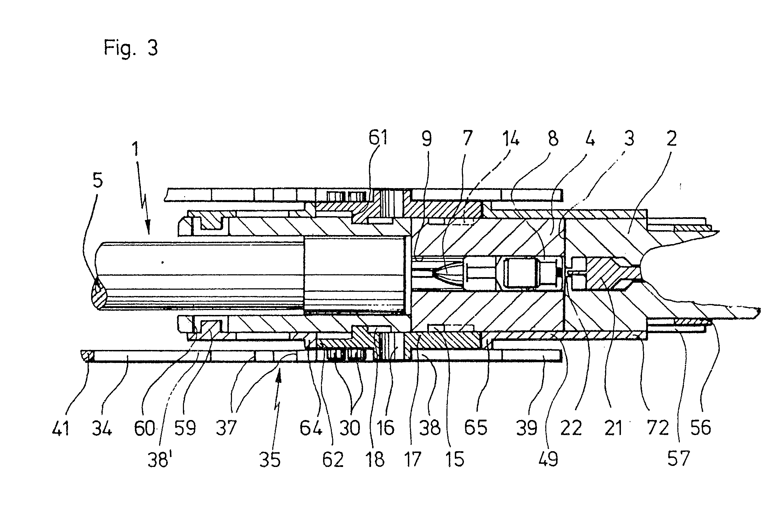

Fig. 3 einen Schnitt nach Linie III-III der Fig.

Bei dem in der Zeichnung dargestellten Ausführungsbeispiel handelt es sich um ein automatisches Gewehr, das zum Verschiessen von hülsenlosen Patronen eingerichtet ist. In einem mit einem Rohr 1 fest verbundenen Teil 2 befindet sich eine zylindrische Bohrung 3, deren Achse zur Rohrachse senkrecht verläuft und die Rohrachse schneidet. In dieser Bohrung ist ein walzenförmiges Verschlussteil 4 gelagert, das um die Achse der Bohrung 3 schwenkbar ist. In der Zeichnung ist dieses Verschlussteil in der Schussposition dargestellt. In dieser Schussposition fluchtet ein in dem Verschlussteil 4 angebrachtes Patronenlager 9 mit der Bohrung 5 des Rohres 1. Das Patronenlager ist symmetrisch zu einer Quermittelebene des Gewehres gestaltet, auf der die Achse des Rohres 1 senkrecht steht und in der die Achse des Verschlussteiles 4 liegt. Eine im Patronenlager 9 befindliche hülsenlose Patrone umfasst einen Treibmittelkörper 8 mit an einer Stirnseite herausragendem Geschoss 7. Zu beiden Seiten der erwähnten Quermittelebene sind in dem einen etwa rechteckigen lichten Querschnitt aufweisenden Patronenlager 9 Anlageflächen vorgesehen, an denen entsprechende Gegenflächen 6 des Treibmittelkörpers 8 zur Anlage kommen, die dadurch die Position der Patrone 7, 8 im Patronenlager 9 festlegen. Das Patronenlager ist zu einer Ebene symmetrisch, auf der die Achse der Bohrung 5 senkrecht steht und in der die Achse des Verschlussteiles 4 liegt.

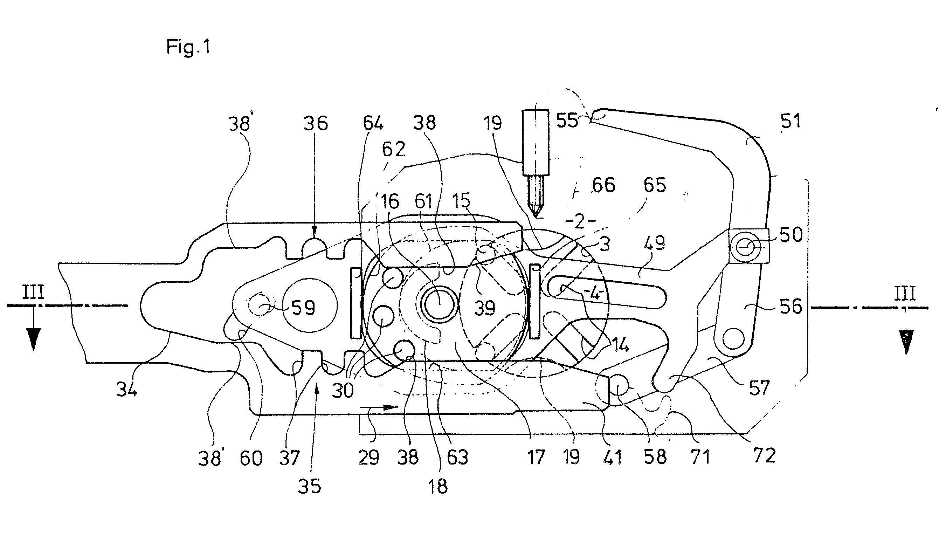

An der der Bohrung 5 gegenüberliegenden Seite der Bohrung 3 ist ein Schlagbolzen 21 in einer Bohrung 22 des Teiles 2 gelagert, die sich in Flucht zur Bohrung 5 erstreckt. Der Schlagbolzen 21 ist mit einer Anlageschulter 10 auf der dem Patronenlager 9 abgewandten Seite versehen, die nach dem Entzünden des Treibmittelkörpers 8 an einer Anlagefläche 11 der Bohrung 22 zur Abdichtung zur Anlage kommt, die durch eine Verengung der Bohrung 22 gebildet ist. Werden anstelle von hülsenlosen Patronen solche mit Hülse verwendet, dann übernimmt die Hülse die Abdichtung und es kann auf die Schulter 10 und die Anlagefläche 11 verzichtet werden. Der Schlagbolzen 21 befindet sich normalerweise in der in Fig. 1 dargestellten Position, in der sein vorderes, auf eine Zündmasse 23 beim Abschuss einwirkendes Ende nicht den Mantel der Bohrung 3 durchdringt. Zum Zünden einer Patrone wird der Schlagbolzen 21 durch einen nicht dargestellten Hahn nach vorn geschlagen, der in üblicher Weise mit Gliedern einer Abzugseinrichtung zusammenwirkt, die von einem Abzug 28 betätigt wird.

Zum Laden der Waffe ist das Verschlussteil 4 um 90° in eine Ladeposition schwenkbar, bei der das Patronenlager 9 zur Achse der Bohrung 5 senkrecht steht und eines der offenen Enden des Patronenlagers nach oben einem Magazin 31 zugewandt ist, das über dem Rohr 1 der Waffe angeordnet ist und sich parallel zu diesem Rohr erstreckt. Bei diesem Magazin 31 handelt es sich um ein Stangenmagazin, in dem die Patronen 7, 8 derart angeordnet sind, dass sie senkrecht zur Schussrichtung stehen und Spitzen 33 der Geschosse 7 zur Rohrachse weisen. Die im Magazin jeweils zuvorderst befindliche (in Schussrichtung letzte) Patrone 7, 8 fluchtet mit dem Patronenlager 9 im Verschlussteil 4, wenn sich dieses in der Ladeposition befindet. Auf der dem Magazin 31 gegenüberliegenden Seite ist in das Teil 2, in die Bohrung 3 mündend, ein Schacht 12 eingearbeitet, der sich nach unten hin in einen hohen Pistolengriff 13 des Gewehres öffnet.

Von einem nicht dargestellten Durchladehebel aus führt ein Bowdenzug 24 zu dem dem Verschlussteil 4 benachbarten Ende des Magazins 31, wo der Bowdenzug 24 in eine um eine zur Achse der Bohrung 3 parallele Achse 25 schwenkbare Hülse 26 übergeht, in der ein Ausstosserbolzen 27 verschiebbar gelagert ist. Die Hülse 26 steht unter der Wirkung einer Druckfeder 32, unter deren Wirkung sie an der jeweils am Ende des Magazins 31 befindlichen Patrone 7, 8 anliegt. Fehlt eine Patrone im Magazins 31 oder ist das Magazin 31 abgenommen, ist die Hülse 26 von der Druckfeder 32 in eine Lage verschwenkt, in der sie mit dem Patronenlager 9 fluchtet, wenn sich dieses in der Ladeposition befindet. Durch Betätigen des Durchladehebels ist über den Bowdenzug 24 der Ausstosserbolzen 27 betätigbar, der eine im Patronenlager 9 befindliche Patrone nach unten durch den Schacht 12 hindurch ausstösst. Befindet sich noch eine Patrone im Patronenlager 9, wenn die nächste Patrone aus dem Magazin 31 eingeführt wird, so stösst diese Patrone beim Einführen die noch im Patronenlager 9 befindliche Patrone aus, wobei Geschossspitze 33 auf Geschossspitze 33 trifft.

Zum Verschwenken des Verschlussteiles 4 dient ein Steuerschieber 41, der in Längsrichtung der Waffe verschiebbar gelagert ist und der über eine nicht dargestellte Stange mit einer ebenfalls nicht näher dargestellten, vom Gasdruck betätigten Antriebseinrichtung bekannter Art verbunden ist. Der Steuerschieber 41 ist in Richtung eines Pfeiles 29 durch die Gasdruckladeeinrichtung und in der entgegengesetzten Richtung durch eine nicht dargestellte Vorholfeder bewegt. Das gegen die Mündung des Rohres 1 gerichtete Ende des Steuerschiebers 41 ist mit einer Längsaussparung 34 versehen, deren Kontur zwei einander etwas gegenüberliegende Verzahnungen 35 und 36 umfasst, die jeweils drei Einschnitte 37 umfassen. Anschliessend an die Verzahnungen 35 und 36 sind zueinander parallele Flanken 38 vorgesehen, die an ihren dem Rohr 1 abgewandten Enden in sich keilförmig erweiternde Schrägflächen 39 übergehen.

Dem Antrieb des Verschlussteiles 4 dient ferner ein Maltesergetriebe; dieses umfasst in zumindest eine Stirnseite des walzenförmigen Verschlussteiles 4 eingearbeitete Nuten 14, die radial angeordnet sind und in die Mantelfläche münden. Die Nuten 14 sind zueinander um jeweils 90° versetzt angeordnet. In die Nuten 14 greifen jeweils abwechselnd zwei Zapfen 15 ein, die um eine zum Teil 2 feststehende Achse 16 drehbar sind, die parallel zur Achse der Bohrung 3 verläuft. Die Zapfen 15 sind an einer Stirnseite einer Kurvenscheibe 17 angeordnet, die an ihrer Stirnseite ausser den Zapfen 15 auch noch einen zur Achse 16 konzentrischen Sperrnocken 18 trägt. Der Sperrnocken 18 weist die Gestalt eines Halbkreisbogens auf. Einander gegenüberliegend sind in die Stirnseite des Verschlussteiles 4 zwischen je zwei der Nuten 14 je eine Aussparung 19 eingearbeitet, deren Aussparungsgrund eine Kreisbogenkontur ist, deren Krümmung gleich der Krümmung des Sperrnockens 18 ist. Ist das Verschlussteil 4 aus der in Fig. 1 dargestellten Lage um 90° verschwenkt, so greift der Sperrnocken 18 in eine der beiden Aussparungen 19 ein. Dabei befindet sich das Verschlussteil 4 in der Ladeposition. Die momentane Winkelposition des Verschlussteiles 4 ist also stets durch die Zapfen 15 oder den Sperrnocken 18 exakt definiert und formschlüssig gesichert.

Die Zapfen 15 und der Sperrnocken 18 befinden sich auf der der Waffenmitte zugewandten Stirnseite der Kurvenscheibe 17. Auf der nach aussen gewandten Stirnseite der Kurvenscheibe 17 sind etwas im Bereich des Sperrnockens 18 drei Bolzen 30 vorgesehen. Die Bolzen 30 befinden sich in der Ebene des Steuerschiebers 41; die beiden äusseren Bolzen 30, die von der Drehachse 16 einen grösseren Abstand aufweisen als der zwischen ihnen befindliche mittlere Bolzen 30, liegen in der in Fig. 1 dargestellten Schussposition jeweils an einer der beiden parallelen Kanten 38 des Steuerschiebers 41 an, wodurch die Kurvenscheibe 17 und damit auch das Verschlussteil 4 an jeder Drehung gehindert sind.

Bei Abgabe eines Schusses wirkt der Gasdruck auf die Gasdruckladeeinrichtung, die daraufhin den Steuerschieber 41 in Richtung des Pfeiles 29 verschiebt. Dabei kommen die drei Bolzen 30 nacheinander in Eingriff mit den drei Vertiefungen 37 der Verzahnung 35, wodurch die Kurvenscheibe 17 um 180° verschwenkt wird, bis die Bolzen 30 an am anderen Ende der beiden Verzahnungen 35 und 36 anschliessenden parallelen Kanten 38' anliegen und wiederum eine weitere Drehung der Kurvenscheibe 17 bzw. des Verschlussteiles 4 verhindern. Bei dieser Drehung der Kurvenscheibe 17 um 180° nimmt einer der Zapfen 15 das Verschlussteil 4 um 90° mit, bis, noch vor Ende der Drehung der Kurvenscheibe 17, der Sperrnocken 18 in die Aussparung 19 eingreift, worauf das Verschlussteil 4 während der restlichen Drehbewegung der Kurvenscheibe 17 drehfest gehalten ist. Damit ist die Ladeposition erreicht, in der das Patronenlager 9 mit seiner Längsrichtung senkrecht zur Achse des Rohres 1 steht. Ein Ladehebel 51, dessen Anordnung und Funktion anschliessend noch beschrieben wird, schiebt mit seinem gabelförmigen, die Hülse 26 umgreifenden Ladeende 55 die nächste Patrone 7, 8 aus dem Magazin 31 in das Patronenlager 9.

Lässt nun, wenn das Geschoss das Rohr verlassen hat, der Gasdruck nach, so schiebt die Schliessfeder oder Vorholfeder den Steuerschieber 41 entgegen der Richtung des Pfeiles 29 wieder nach vorn. Dabei kommen die drei Bolzen 30 nacheinander in Eingriff mit den Vertiefungen 37 der Verzahnung 36 und drehen die Kurvenscheibe 17 um weitere 180° wieder in die in Fig. 1 dargestellte Position. Während des ersten Teiles dieser Drehbewegung der Kurvenscheibe 17 befindet sich der Sperrnocken 18 noch in der Aussparung 19 und es dreht sich das Verschlussteil 4 noch nicht. Anschliessend kommt der Sperrnocken 18 aus der Aussparung 19 frei und es kommt einer der Zapfen 15 in Eingriff mit der nächsten Nut 14 und nimmt das Verschlussteil 4 mit, bis die dargestellte Position erreicht ist, in der sich beide Zapfen 15 im radial äusseren Bereich der Nuten 14 befinden. Nach dieser erneuten Drehung um 90° befindet sich das Verschlussteil 4 wieder in Schussposition.

Der Ladehebel 51 ist als Winkelhebel ausgebildet, an dem in der Nähe des Winkels ein Steuerhebel 49 um eine zur Achse der Bohrung 3 parallele Achse 50 schwenkbar angelenkt ist. Am Ende desselben Armes 56 des Ladehebels 51 ist ein Lenker 57 angelenkt, dessen anderes Ende um eine am Teil 2 feste Achse 58 schwenkbar ist. Der Lenker 57 und der Ladehebel 51 bilden daher ein Kniegelenk. An dem Steuerhebel 49 ist in der Nähe des Lenkers 57 ein kurzer Arm 72 angeformt, der zur Weiterschaltung eines gezahnten Rades 71 eines nicht näher dargestellten Schusszählers dient.

An dem dem Ladehebel 51 gegenüberliegenden Ende ist der Steuerhebel 49 mit einem seitlichen Ansatz 59 versehen, der in eine in das Teil 2 eingearbeitete Nut 60 eingreift, die einen spitzen Winkel von etwa 30° bis 40° zur Rohrachse einnimmt.

Der Steuerhebel 49 wird von der Kurvenscheibe 17 sowohl in Richtung des Rohres 1 als auch quer dazu formschlüssig bewegt. Zu diesem Zweck weist die Kurvenscheibe 17 zwei Gleichdick-Konturen 61 und 62 auf. Die Gleichdick-Kontur 61 liegt in der Ebene des als im wesentlichen als falsche Platine ausgebildeten Steuerhebels 49, der zu diesem Zweck mit einer Aussparung 63 versehen ist, deren Kontur ein Rechteck mit stark abgerundeten Ecken ist, wobei die lange Seite des Rechtecks zur Waffenlängsachse etwa parallel ist. An dem Steuerhebel 49 sind ferner zwei Leisten 64 und 65 angeformt, die in der Ebene der Gleichdick-Kontur 62 liegen und die zur Längsrichtung des die Aussparung 63 bildenden Rechtecks senkrecht stehen. Die Gleichdick-Konturen 61 und 62 haben die Eigenschaft, dass zwei an sie angelegte zueinander parallele Tangenten überall den gleichen lichten Abstand voneinander haben. Die beiden Längsseiten des die Aussparung 63 bildenden Rechteckes weisen den Abstand der beiden Tangenten an die Gleichdick-Kontur 61 voneinander auf, wogegen die beiden Leisten 64 und 65 Tangenten an die Gleichdick-Kontur 62 sind. Durch Verdrehen der Kurvenscheibe 17 mit den beiden Gleichdick-Konturen 61 und 62 lässt sich also der Steuerhebel 49 in Waffenlängsrichtung sowie quer hierzu in seiner Ebene verschieben (wobei ohne die Anlenkung an der Achse 50 und ohne die Rührung 59, 60 der Steuerhebel um die Kurvenscheibe 17 drehbar wäre). Die Verschiebung in Waffenlängsrichtung bewirkt die an den Leisten 64 und 65 anliegende Gleichdick-Kontur 62, die Verschiebung aufwärts und abwärts bewirkt die an der Aussparung 63 anliegende Gleichdick-Kontur 61. Die beiden Gleichdick-Konturen 61 und 62 erzeugen unter zusätzlicher Korektur durch die Schwenkbewegung des Steuerhebels 49, die von dem Ansatz 59 in der Nut 60 entlanglaufend erzeugt wird, eine Koppelkurve des Ladeendes 55 des Ladehebels 51, wie sie in Fig. 1 als Koppelkurve 66 gestrichelt angedeutet ist. Beim Abfeuern des Schusses befindet sich das Ladeende 55 etwa in halber Höhe. Während des Rücklaufes des Steuerschiebers 41 bewegt sich das Ladeende 55 nach oben. Sobald das Verschlussteil 4 stillsteht und sich nicht mehr dreht, sich jedoch die Kurvenscheibe 17 und damit die Gleichdick-Konturen 61 und 62 noch drehen, schiebt sich das Ladeende 55 in Schussrichtung vor bis über das rückwärtige, obere Ende des Treibmittelkörpers 8 der Patrone 7, 8, die dem Patronenlager 9 des Verschlussteiles 4 jetzt gegenübersteht. Während der restlichen Drehbewegung der Kurvenscheibe 17 während der Rückwärtsbewegung des Steuerschiebers 41 bewegt sich das Ladeende 55 praktisch geradlinig nach unten in Richtung auf das Verschlussteil 4 zu und schiebt die Patrone ein. Der Rest der Einschubbewegung bis zur tiefsten Position des Ladeende 55 erfolgt zu Beginn der Vorlaufbewegung des Steuerschiebers 41, solange sich zwar die Kurvenscheibe 17 bereits dreht, das Verschlussteil 4 jedoch durch den noch in die Aussparung 19 eintauchenden Sperrnocken 18 arretiert ist. Zu Beginn der Drehbewegung des Verschlussteiles 4 beginnt das Ladeende 55 sich nach rückwärts hin von der Patronenlageröffnung zu entfernen und hält etwa auf ein Drittel bis einhalb der Aufwärtsbewegung der Koppelkurve 66 an, wenn der Steuerschieber 41 in seine vordere Position einläuft.

Da die Achse des Patronenlagers 9 die Achse der das Verschlussteil 4 bildenden Walze schneidet, wirken die beim Abfeuern einer Patrone 7, 8 infolge des Gasdruckes auftretenden Kräfte symmetrisch auf das Verschlussteil 4, so dass keinerlei Drehmomente entstehen und zum Halten des Verschlussteiles keine wesentlichen Kräfte erforderlich sind. Infolgedessen werden auch keine komplizierten Verriegelungseinrichtungen für das Verschlussteil benötigt. Da die Ladeposition gleich der Auswerferposition ist, kann das Verschlussteil 4 einer gleichbleibenden Richtung drehbar angeordnet sein und es kann der Auswerfer 26, 27 an derselben Seite des Rohres 1 angeordnet sein wie das Magazin 31, wodurch gleichzeitig ein Ausstossen nach unten durch den Schacht 12 hindurch möglich ist. Das Vermeiden einer Zwischenposition des Verschlussteiles zwischen Schussposition und Ladeposition hat also eine ganze Reihe von Vorteilen zur Folge. Die dargestellte und beschriebene Anordnung des Steuerschiebers 41, des Steuerhebels 49 und der Kurvenscheibe 17 ergibt eine zuverlässige Funktion, die von der Amplitude der Bewegung des Steuerschiebers nicht abhängt, sofern nur ein gewisser Mindestbewegungshub eingehalten wird, weil die Hubabschnitte, in denen die Bolzen 30 an den parallelen Kanten 38 bzw. 38' anliegen, keinen Einfluss auf die Verschlussbetätigung ausüben.

## Patentansprüche

1. Automatische Handfeuerwaffe, insbesondere Gewehr, mit einer in einem rohrfesten Teil (2) vorgesehenen, zur Rohrachse senkrechten zylindrischen Aussparung (3), deren Wand als Lagerung eines darin koaxial angeordneten, walzenförmigen Verschlussteils (4) dient, das durch eine Anordnung zum Verschwenken in eine Lade-, eine Schuss- und eine Auswerferposition um seine Längsachse schwenkbar ist und ein in seiner Schussposition mit dem Rohr (1) fluchtendes Patronenlager (9) enthält, das in dieser Position durch das rohrfeste Teil (2) nach hinten abgeschlossen ist, wogegen in der Ladeposition das Patronenlager (9) zum Einführen einer eine Treibladung (8) und ein Geschoss (7) umfassenden Patrone, insbesondere einer hülsenlosen Patrone, der Austrittsöffnung eines die Patronen enthaltenden Magazins (31) gegenübersteht und das Verschlussteil (4) durch die Anordnung zum Verschwenken in seiner jeweiligen Position gehalten ist, wobei das Magazin an einer Seite der Waffe und insbesondere oberhalb des Rohres (1) angeordnet ist, dadurch gekennzeichnet, dass das Verschlussteil (4) durch die Anordnung zum Verschwenken (41, 17, 14) nur in einer gleichbleibenden Richtung drehbar ist, dass eine Ausstossöffnung für Hülsen oder nicht abgeschossene Patronen diametral gegenüber der Austrittsöffnung des Magazins (31) angeordnet ist, und dass auf derselben Seite der Waffe wie das Magazin (31) ein Ausstosser (26, 27) angeordnet ist.

2. Handfeuerwaffe nach Anspruch 1, dadurch gekennzeichnet, dass das Patronenlager (9) im Verschlussteil (4) zu einer Quermittelebene symmetrisch ausgebildet ist und zwei Schusspositionen einzunehmen vermag, die sich durch eine Drehung des Verschlussteiles um 180° voneinander unterscheiden, und dass zur Festlegung der Lage der Patronen (7, 8) im Patronenlager Anschlagflächen vorgesehen sind.

3. Handfeuerwaffe nach Anspruch 2, dadurch gekennzeichnet, dass der Schwenkwinkel des Verschlussteiles (4) zwischen Ladeposition und Schussposition 90° beträgt.

4. Handfeuerwaffe nach einem der vorhergehenden Ansprüche, dadurch gekennzeichnet, dass das die Patronen (7, 8) in das Patronenlager (9) im Verschlussteil (4) einschiebende Ladeende (55) eines Ladehebels (51) ausser der Patronenmitte angreift und diese frei lässt, und dass in der Mittelebene ein Ausstosser (27) angeordnet ist, der bei fehlender Patrone (7, 8) unter Federkraft (32) in eine Lage schwenkt, in der er dem Patronenlager (9) gegenübersteht.

5. Handfeuerwaffe nach Anspruch 4, dadurch gekennzeichnet, dass der Ausstosser (27) über einen Bowdenzug (24) von einer manuell zu betätigenden Durchladeanordnung in das Patronenlager (9) einschiebbar ist.

6. Handfeuerwaffe nach einem der vorhergehenden Ansprüche, dadurch gekennzeichnet, dass an zumindest einer Stirnseite an dem Verschlussteil (4) ein Malteserkreuzgetriebe (14 bis 19) als Anordnung zum Schwenken vorgesehen ist.

7. Handfeuerwaffe nach Anspruch 6, dadurch gekennzeichnet, dass das Malteserkreuzgetriebe vier in die Stirnseite des Verschlussteiles (4) eingearbeitete radiale Nuten (14) umfasst, in die Kurvenscheibe (17) eingreifen, die an deren einer Stirnseite vorstehend angebracht sind und die Kurvenscheibe (17) von einem Antrieb (41) während eines Schusszyklus einmal um 360° drehbar ist.

8. Handfeuerwaffe nach Anspruch 7, dadurch gekennzeichnet, dass das Verschlussteil (4) in der Ebene der Malteserkreuznuten (14) mit für jede Ladeposition vorgesehenen kreisabschnittförmigen Aussparungen (19) im Randbereich versehen ist, und dass an der Kurvenscheibe (17) ein in eine Aussparung (19) eingreifender Sperrnocken (18) angebracht ist, dessen wirksame Kontur konzentrisch zur Kurvenscheibenrotationsachse (16) ist und dass stets entweder mindestens einer der Zapfen (15) oder der Sperrnocken (18) in die Malteserkreuznuten (14) bzw. eine der Aussparungen (19) eingreifen.

9. Handfeuerwaffe nach einem der vorhergenden Ansprüche, dadurch gekennzeichnet, dass sie als Gasdrucklader ausgebildet ist, deren Gaskolben einen Steuerschieber (41) entgegen Federkraft betätigt, der mit zwei Verzahnungen (35 und 36) versehen ist, die abwechselnd bei Vor- bzw. Rücklauf des Steuerschiebers mit entsprechenden Vorsprüngen der Kurvenscheibe (17) in Eingriff treten und diese um jeweils 180° verschwenken.

10. Handfeuerwaffe nach Anspruch 9, dadurch gekennzeichnet, dass die Vorsprünge als axiale Bolzengruppe mit zumindest zwei, vorzugsweise drei Bolzen (30) ausgebildet sind die an der dem Zapfen (15) und dem Sperrnocken (18) gegenüberliegenden Stirnseite an der Kurvenscheibe (17) vorgesehen sind, und dass an die einander gegenüberliegenden Verzahnungen (35 und 36) des Steuerschiebers (41) gerade Flanken (38 bzw. 38') anschliessen, an denen die Bolzen (30) nach dem Aussereingriffkommen mit der Verzahnung eine weitere Drehung der Kurvenscheibe (17) formschlüssig verhindernd anliegen.

11. Handfeuerwaffe nach Anspruch 10, dadurch gekennzeichnet, dass der Abstand der Bolzenmitten der beiden äusseren Bolzen (30) voneinander so gross ist wie der lichte Abstand zwischen den zueinander parallelen Flanken (38 und 38') abzüglich eines Bolzendurchmessers.

12. Handfeuerwaffe nach einem der Ansprüche 7 bis 11, dadurch gekennzeichnet, dass die um eine rohrfeste Achse (16) drehbare Kurvenscheibe (17) in eine Aussparung (63) eines Steuerhebels (49) eingreift, der mit einem Ende an einem als Kniehebel (57, 51) ausgebildeten Ladehebel (51) angelenkt ist.

13. Handfeuerwaffe nach einem der Ansprüche 7 bis 12, dadurch gekennzeichnet, dass die Kurvenscheibe (17) zwei axial zueinander versetzte Aussenkonturen (61 und 62) aufweist, deren eine in einer Aussparung (63) und deren andere an einer aufgesetzten Leiste (64, 65) des als flache Platine ausgebildeten Steuerhebels (49) angreift, dass das dem Ladehebel (51) abgewandte Ende des Steuerhebels (49) in einer rohrfesten und zur Rohrachse schrägen Nut (60) verschiebbar gelagert ist, und dass die Kurvenscheibe (17) dem ladehebelseitigen Steuerhebelende eine Koppelkurvenbewegung aufzwingt.

14. Handfeuerwaffe nach Anspruch 13, dadurch gekennzeichnet, dass die Konturen der Kurvenscheibe (17) als Gleichdick-Konturen (61 und 62) ausgebildet sind, die stets an zwei einander gegenüberliegenden zueinander parallelen Kanten (63 bzw. 64, 65,) des Steuerhebels (49) anliegen, und dass die beiden Kantenpaare etwa senkrecht zueinander angeordnet sind.

15. Handfeuerwaffe nach einem der Ansprüche 4 bis 13, dadurch gekennzeichnet, dass die Anordnung zum Schwenken des Verschlussteiles (4) aus Steuerschieber (41), Steuerhebel (49) und Kurvenscheiben (17) doppelt ausgeführt und symmetrisch an beiden Seiten des Verschlussteiles angeordnet ist.

## Revendications

1. Arme portative automatique, en particulier fusil, comprenant un évidement cylindrique (3), perpendiculaire à l'axe du canon, qui est prévu dans une pièce (2) fixe par rapport au canon et dont la paroi sert de logement à une pièce d'obturation (4) en forme de cylindre, qui est agencée coaxialement dans ce logement, peut être amenée, par und dispositif de pivotement, à pivoter autour de son axe longitudinal dans une position de chargement, une position de tir et une position d'éjecteur et contient une chambre de cartouche (9) qui, dans sa position de tir, est en alignement avec le canon (1) et est fermée vers l'arrière, dans cette position, par la pièce (2) fixe par rapport au canon, tandis que, dans la position de chargement, la chambre de cartouche (9) est située, pour l'introduction d'une cartouche comprenant une charge propulsive (8) et un projectile (7), en particulier d'une cartouche sans douille, en face de l'orifice de sortie d'un magasin (31) contenant les cartouches, la piece d'obturation (4) étant maintenue par le dispositif de pivotement dans sa position respective, le magasin étant agencé d'un côté de l'arme et en particulier au-dessus du canon (1), caractérisée en ce que la pièce d'obturation (4) peut être amenée à tourner par le dispositif de pivotemen (41, 17, 14) uniquement dans un sens invariable, en ce qu'un orifice d'éjection pour des douilles ou des cartouches non tirées est agencé diamétralement en face de l'orifice de sortie du magasin (31), et en ce qu'un éjecteur (26, 27) est agencé du même côté de l'arme que le magasin (31).

2. Arme portative suivant la revendication 1, caractérisée en ce que la chambre de cartouche (9) de la pièce d'obturation (4) est réalisée de manière symétrique par rapport à un plan médian transversal, en ce qu'elle peut occuper deux positions de tir qui se différencient mutuellement par une rotation de la pièce d'obturation de 180°, et en ce que des surfaces de butée sont prévues dans la chambre de cartouche pour la fixation de la position des cartouche (7, 8).

3. Arme portative suivant la revendication 2, caractérisée en ce que l'angle de pivotement de la pièce d'obturation (4) entre la position de chargement et la position de tir est de 90°.

4. Arme portative suivant l'une des revendications précédentes, caractérisée en ce que l'extrémité de chargement (55) d'un levier de chargement (51), qui enfonce les cartouches (7, 8) dans la chambre de cartouche (9) de la pièce d'obturation (4), agit en dehors du milieu de la cartouche et laisse celui-ci libre, et en ce que, dans le plan médian, est agencé un éjecteur (27) qui, en cas d'absence de cartouche (7, 8), pivote sous une force de ressort (32) dans une position dans laquelle il est situé en face de la chambre de cartouche (9).

5. Arme portative suivant la revendication 4, caractérisée en ce que l'éjecteur (27) peut être enfoncé dans la chambre de cartouche (9) par l'intermédiaire d'un câble Bowden (24) d'un dispositif de chargement à actionner manuellement.

6. Arme portative suivant l'une des revendications précédentes, caractérisée en ce qu'un mécanisme en croix de Malte (14 à 19) est prévu, à titre de dispositif de pivotement, sur au moins un côté fronta de la pièce d'obturation (4).

7. Arme portative suivant la revendication 6, caractérisée en ce que le mécanisme en croix de Malte comprend quatre rainures radiales (14), qui sont façonnées dans le côté frontal de la pièce d'obturation (4) et dans lesquelles pénètrent des tourillons (15) d'une came (17) qui sont agencés en saillie sur une face frontale de cette came, et en ce que la came (17) peut être tournée en une fois de 360° par un entraînement (41) pendant un cycle de tir.

8. Arme portative suivant la revendication 7, caractérisée en ce que la pièce d'obturation (4) présente, dans la zone marginale, dans le plan des rainures en croix de Malte (14), des évidements (19) en forme de segment de cercle, prévus pour chaque position de chargement, et en ce que, sur la came (17), est agencée und saillie d'arrêt (18) qui pénètre dans un évidement (19) et dont le contour actif est concentrique à l'axe de rotation (16) de la came, et en ce que, soit au moins un des tourillons (15), soit la saillie d'arrêt (18) est toujours en prise dans les rainures en croix de Malte (14) ou respectivement un des évidements (19).

9. Arme portative suivant l'une des revendications précédentes, caractérisée en ce qu'elle est réalisée sous la forme d'une arme automatique à emprunt de gaz, dont le piston actionne à l'encontre d'une force de ressort un coulisseau de commande (41) qui présente deux dentures (35 et 36), qui entrent alternativement en prise, lors du déplacement vers l'avant et respectivement vers l'arrière du coulisseau de commande, avec des saillies correspondantes de la came (17) et font pivoter celle-ci de chaque fois 180°.

10. Arme portative suivant la revendication 9, caractérisée en ce que les saillies sont réalisées sous la forme d'un groupe de tiges axiales, comprenant au moins deux axes, de préférence trois (30), qui sont prévues sur la face frontale de la came (17) qui est opposée aux tourillons (15) et à la saillie d'arrêt (18), et en ce que, aux dentures (35 et 36) du coulisseau de commande (41) qui se font mutuellement en face, se raccordent des flancs droits (38 et respectivement 38') sur lesquels les axes (30), après leur sortie de prise avec la denture, sont en appui de manière à empêcher, par liaison de forme, une rotation ultérieure de la came (17).

11. Arme portative suivant la revendication 10, caractérisée en ce que la distance entre les milieux des deux axes externes (30) est aussi grande que l'écart libre entre les flancs mutuellement parallèles (38 et 38') moins un diamètre d'axe.

12. Arme portative suivant l'une des revendications 7 à 11, caractérisée en ce que la came (17) capable de pivoter autour d'une axe (16) fixe par rapport au canon pénètre dans un évidement (63) d'une levier de commande (49) qui, à une de ses extrémités, est articulé à un levier de chargement (51) réalisé sous la forme d'un levier coudé (57, 51).

13. Arme portative suivant l'une des revendications 7 à 12, caractérisée en ce que la came (17) présente deux contours externes (61 et 62) mutuellement décalés axialement, dont l'un agit dans un évidement (63) et dont l'autre agit sur un rebord dressé (64, 65) du levier de commande (49) réalisé sous la forme d'une platine plane, en ce que l'extrémité, opposée au levier de chargement (51), du levier de commande (49) est supportées de manière à pouvoir coulisser dans une rainure (60) fixe par rapport au canon et inclinée par rapport à l'axe du canon, et en ce que la came (17) contraint l'extrémité du levier de commande du côté levier de chargement à effectuer un mouvement suivant une trajectoire de bielle.

14. Arme portative suivant la revendication 13, caractérisée en ce que les contours de la came (17) sont réalisés sous la forme de contours de corps à épaisseur uniforme (61 et 62), qui sont toujours en appui sur deux bords (63 et respectivement 64, 65) opposés, mutuellement parallèles, du levier de commande (49) et en ce que les deux paires de bords sont agencées approximativement mutuellement perpendiculairement.

15. Arme portative suivant l'une des revendications 4 à 13, caractérisée en ce que le dispositif de pivotement de la pièce d'obturation (4) à base du coulisseau de commande (41), du levier de commande (49) et de la came (17) est réalisé en double et en ce qu'il est agencé symétriquement des deux côtés de la pièce d'obturation.

**Claims**

1. An automatic hand firearm, in particular a rifle, having in a part (2) fixed to the barrel a cylindrical recess (3) extending perpendicularly to the barrel axis, the wall of said recess serving as a bearing for a coaxial roller-shaped breechblock (4) which is pivotal about its longitudinal axis by pivot means into loading, firing and eject positions and contains a magazine chamber (9) which in its firing position registers with the barrel (1) and is rearwardly closed in this position by the part (2) fixed to the barrel, whereas in the loading position, for inserting a cartridge including a propellant charge (8) and a bullet (7), in particular a caseless cartridge, the magazine chamber (9) is opposite the outlet opening of a magazine (31) containing the cartridges and the breech-block (4) is held in its respective position by the pivot means, whereby the magazine is arranged at one side of the firearm and in particular above the barrel (1), characterised in that the breechblock (4) is only rotatable in a constant direction by the pivot means (41, 17, 14), that an ejection opening for cases or unfired cartridges is arranged diametrically opposite the outlet opening of the magazine (31), and that on the same side of the firearm as the magazine (31) is arranged an ejector (26, 27).

2. A hand firearm according to claim 1, characterised in that the cartridge chamber (9) in the breech-block (4) is formed symmetrically with respect to a transverse median plane and can assume two firing positions which differ from each other by a rotation of the breech-block through 180°, and that abutment surfaces are provided in order to fix the position of the cartridges (7, 8) in the cartridge chamber.

3. A hand firearm according to claim 2, characterised in that the pivot angle of the breech-block (4) between the loading position and the firing position is 90°.

4. A hand firearm according to one of the preceding claims, characterised in that the loading end (55) of a loading lever (51) for inserting the cartridges (7, 8) into the cartridge chamber (9) in the breech-block (4) engages elsewhere than the middle of the cartridge and leaves this free, and that in the median plane is arranged an ejector (27) which, when a cartridge (7, 8) is missing, pivots by spring force (32) into a position in which it is opposite the cartridge chamber (9).

5. A hand firearm according to claim 4, characterised in that the ejector (27) is slidable into the magazine chamber (9) by means of a manually actuatable loading arrangement via a Bowden cable (24).

6. A hand firearm according to one of the preceding claims, characterised in that at least at one end face a Maltese cross transmission (14 to 19) is provided on the breech-block (4) as the pivot means.

5. A hand firearm according to claim 6, characterised in that the Maltese cross transmission comprises four radial grooves (14) formed in the end face of the breech-block (4) in which grooves engage pins (15) projectingly fixed to one end face of a cam disc (17), and the cam disc (17) is rotatable by a drive (41) once through 360° during one firing cycle.

8. A hand firearm according to claim 7, characterised in that the breech-block (4) is provided in its edge region in the plane of the Maltese cross grooves (14) with respective arcuate recesses (19) for each loading position, and that the cam disc (17) is provided with a stop cam (18) for engaging in a recess (19), the contour of said stop cam being concentric with the axis of rotation (16) of the cam disc, and that always either at least one of the pins (15) or the stop cam (18) engages in the Maltese cross grooves (14) or one of the recesses (19).

9. A hand firearm according to one of the preceding claims, characterised in that it is constructed as a gas pressure loader whereof the gas piston actuates a control slide (41) against spring force, the control slide being provided with two tooth formations (35 and 36) which during forward and return movement of the control slide alternately engage with corresponding projections of the cam disc (17) so as to pivot the latter through 180° in each case.

10. A hand firearm according to claim 9, characterised in that the projections are constructed as groups of axial pins with at least two, preferably three pins (30) provided on the end face of the cam disc (17) opposite the pin (15) and the stop cam (18),and that adjoining the opposed tooth formations (35 and 36) of the control slide (41) are straight flanks (38, 38') against which the pins (30) lie after disengaging the tooth formation in order to prevent in form-locking manner a further rotation of the cam disc (17).

11. A hand firearm according to claim 10, characterised in that the spacing of the pin centres of the two outer pins (30) from each other is the same as the clearance between the parallel flanks (38 and 38') less one pin diameter.

12. A hand firearm according to one of claims 7 to 11, characterised in that the cam disc (17) rotatable about an axis (16) fast with the barrel engages in a recess (63) of a control lever (49) of which one end is articulated to a loading lever (51) constructed as an elbow lever (57, 51).

13. A hand firearm according to one of claims 7 to 12, characterised in that the cam disc (17) has two mutually axially displaced outer profiles (61 and 62) one of which engages in a recess (63) and the other of which engages a bar (64, 65) fixed on the control lever (49) constructed as a flat plate, that the end of the control lever (49) remote from the loading lever (51) is mounted for displacement in a groove (60) fast with the barrel and inclined with respect to the barrel axis, and that the cam disc (17) constrains the end of the control lever adjacent the loading lever to carry out a coupling curve movement.

14. A hand firearm according to claim 13, characterised in that the profiles of the cam discs (17) are constructed as constant-diameter profiles (61 and 62) which always engage two mutually opposed parallel edges (63 or 64, 65) of the control lever (49), and that the two pairs of edges are arranged approximately perpendicular to each other.

15. A hand firearm according to one of claims 4 to 13, characterised in that the means for pivoting the breech-block (4) comprising control slide (41), control lever (49) and cam disc (17) is duplicated and arranged symmetrically to each side of the breech-block.

Fig.1

0 004 581

38' 36 64 38 19 55 51

62 66 65

16 61 15 -2- 3 49 50

III 59 39 -4- 56

14

34 30 57

38' 60 37 29 38 63 17 19 41 58 71 72

35 18

III

Fig. 2

Fig. 3